# EUROPEAN PATENT APPLICATION

(11) **EP 2 266 755 A1**
(43) Date of publication of application: **29.12.2010**
(21) Application number: 10164063.9
(22) Date of filing: 27.05.2010
(51) Int. Cl.: B24B 23/02, B24B 55/05, F16B 39/00

(54) **Device for preventing removal of a fixing member of a whetstone cover in a disc grinder**

(30) Priority: 01.06.2009 JP 2009132156
(71) Applicant: Makita Corporation, Anjo, Aichi 446-8502 (JP)
(72) Inventor: Sugiura, Shin, Anjo Aichi 446-8502 (JP); Kawakami, Takahiro, Anjo Aichi 446-8502 (JP)
(74) Representative: Kramer - Barske - Schmidtchen

(57) **Abstract**

In a configuration in which a fixing screw (25) is tightened and fixed between opposite ends (22a) and (22b) of an attaching section (22) of a whetstone cover (20), the fixing screw (25) can be prevented from being removed from the end (22b) of the attaching section (22) by fitting a rubber ring (26) to a screw axis section (25a) of the fixing screw (25) between opposite ends (22a) and (22b) of the attaching section (22).

## Description

This application claims priority to Japanese patent application serial number 2009-132156, the contents of which are incorporated herein by reference.

The present invention relates to a device for preventing a fixing member for fixing a whetstone cover from being removed in a handheld disc grinder that is used, for example, for cutting a stone material etc.

This type of disc grinder is provided with a substantially tubular main body accommodating an electric motor therein. A user holds this main body as a grip part for cutting operations etc. At a front part of this main body, a reduction gear part is provided which reduces a rotational speed of the electric motor and output a rotative power in an orthogonal direction by use of a bevel gear train. For this reason, a spindle located at an output side of the reduction gear extends perpendicular to a motor axis. A circular whetstone is attached to the spindle. Generally, a cover is placed over substantially half of the entire circumference at the rear side of the whetstone (a user side) in order to prevent dust etc. produced at the time of cutting operations from scattering to the user side.

The whetstone cover is attached to a boss section provided at a housing (a gear housing) of the reduction gear part by tightening a fixing screw as disclosed, for example, in Japanese Examined Utility Model Publication No. 55-15962. The whetstone cover can be removed in order that a whetstone can be exchanged easily, and the cover can be rotated about the axis of the spindle within an appropriate range so that the position of the cover can be shifted according to a working posture of a user. By loosening the fixing screw, the whetstone cover can be removed and the position of the cover can be shifted.

The known whetstone cover has the following problems. As described above, this whetstone cover is constructed in such a way that it can be removed from the boss section of the gear housing by loosening the fixing screw and the position of the cover can be shifted to a desired position about the axis of the spindle. For this reason, when removing the whetstone cover or adjusting the position of the cover, the fixing screw has sometimes been loosened more than necessary to be removed from the fixing cover. If this occurs, a troublesome tightening operation of the fixing screw is required for fixing the whetstone cover again, or there has been a possibility that the fixing screw might be lost.

Therefore, there is a need in the art to provide a handheld disc grinder in which a fixing member such as the fixing screw etc. can be prevented from being removed from the fixing cover even if the fixing screw is loosened more than necessary, and after that the screw can be tightened easily and there is no possibility of losing the screw.

According to a first aspect of the invention, even if the fixing member is loosened more than necessary, the fixing member can be prevented from being removed from at least one end of an attaching section of the whetstone cover by a removal prevention device, so that the fixing member can be fixed speedily and easily to opposite ends of the attaching section of the whetstone subsequently and there is no possibility of losing the screw.

According to a second aspect of the invention, even if the fixing screw is loosened more than necessary to be removed completely from a screw hole of one end of the attaching section, the fixing screw can be prevented from being removed from the other end of the attaching section by the removal prevention device.

According to a third aspect of the invention, a rubber ring as a removal prevention device is fitted to the fixing screw as a fixing member so that the fixing member can be prevented from being removed from the attaching section and there is no possibility of losing the screw. Further, since the device is constructed in such a way that a rubber ring can be used as a removal prevention device and it is only necessary to fit the rubber to a threaded shank, the above function effect can be obtained without resulting in a large increase in cost and this device for preventing of the fixing member from being removed can be applied broadly to an existing whetstone cover.

Additional objects, features, and advantages, of the present invention will be readily understood after reading the following detailed description together with the claims and the accompanying drawings, in which:
FIG.1 is an overall side view of a disc grinder according to an example.
FIG.2 is a plan view showing the whetstone cover viewed along arrow (II) in FIG.1.
FIG.3 is a cross-sectional view taken from line (III)-(III) of FIG.2 and a vertical cross-sectional view of a tightening section of the fixing screw. This figure shows a state in which the fixing screw is tightened.
FIG.4 is a vertical cross-sectional view of the tightening section of the fixing screw. This figure shows a state in which the fixing screw is loosened.
FIG.5 shows the tightening section of the fixing screw according to a second example. This figure is a vertical cross-sectional view of the tightening section of the fixing screw.

Each of the additional features and teachings disclosed above and below may be utilized separately or in conjunction with other features and teachings to provide improved disc grinders. Representative examples of the present teaching, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful examples of the present teachings.

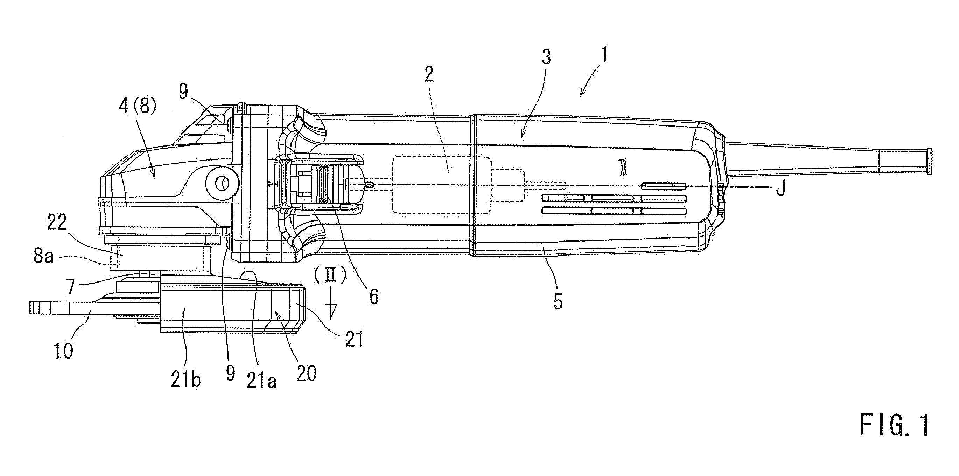

Next, an example will be described with reference to FIGS. 1 to 5. FIG. 1 shows a disc grinder 1 incorporating a device for preventing a fixing member from being removed according to an example. For the purpose of explanation, a left side and a right side of the disc grinder 1 shown in FIG. 1 will be referred to as a front side and a rear side, respectively.

This disc grinder 1 generally includes a main body part 3 and a reduction gear part 4. The main body part 3 is provided with a substantially cylindrical tubular main housing 5. The main housing 5 accommodates an electric motor 2 as a power source. The main housing 5, and eventually the main body part 3 functions as a grip in such a size that a user can hold easily. A user holds the main body part 3 while the user stands at the rear side of the main body part 3. At a lateral side of the main body part 3, a sliding switch lever 6 is arranged. By sliding the switch lever 6 with a fingertip of the user's hand by which the main body part 3 is held, the electric motor 2 can be activated.

At a front part of the main body part 3, the reduction gear part 4 is provided. A rotational speed of the electric motor 2 is reduced by the reduction gear part 4 and a rotative power of the motor 2 is output to a spindle 7 via the reduction gear part. The reduction gear part 4 has a gear housing 8 and a bevel gear train disposed therein. Therefore, a rotation axis of the spindle 7 is perpendicular to the rotation axis of electric motor 2 (i.e., a longitudinal direction J of the main body part 3) as viewed from a lateral side.

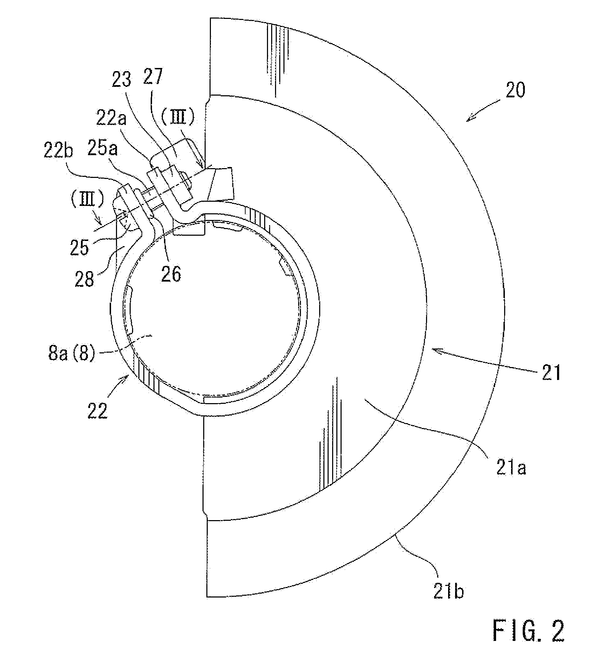

The gear housing 8 is connected to a forward end of the main body housing 5 by means of attaching screws 9. The spindle 7 protrudes downwardly from the gear housing 8, and a circular whetstone 10 is attached to this protruding section. A whetstone cover 20 covers substantially half of the entire circumference at the rear side of the whetstone 10 (i.e., a user side, that is, a right side in FIG. 1) in order to prevent dust such as cutting dust etc. from scattering to a user side. The whetstone cover 20 is shown in FIG. 2.

The whetstone cover 20 includes a cover main body 21 and a C-shaped attaching section 22. The cover main body 21 covers substantially rear half of the entire circumference of the whetstone 10, and the attaching section 22 is fixed to a boss section 8a of the gear housing 8 in a state of being wound around the boss section 8a. The cover main body 21 is provided with a semicircular top plate 21a and a lateral part 21b. The top plate 21a covers an upper side of the whetstone 10. The lateral part 21b is curved along a semicircular arc and is provided along an outer circumference of this top plate 21a to cover a half of an outer circumference side of the whetstone 10. This cover main body 21 covers a half of the whetstone 10 mainly at the rear side of the whetstone 10 to prevent dust etc. from scattering to the user side (the rear side).

By fixing the attaching section 22 to the gear housing 8, the whetstone cover 20 is fixed in a position for covering the rear side of the whetstone 10. This attaching section 22 is manufactured by bending a band-like steel sheet into a circular form and is integrally attached to the cover main body 21 along a circular arc-shaped central portion of the cover main body 21. A boss section 8a of the gear housing 8 is inserted to an inner circumference side of this attaching section 22. Opposite ends of the attaching section 22 are bent by an angle of about 90°toward the outer circumference side to form fixing screw tightening sections 22a and 22b facing each other. These fixing screw tightening sections 22a and 22b serve as end sections of the attaching section 22.

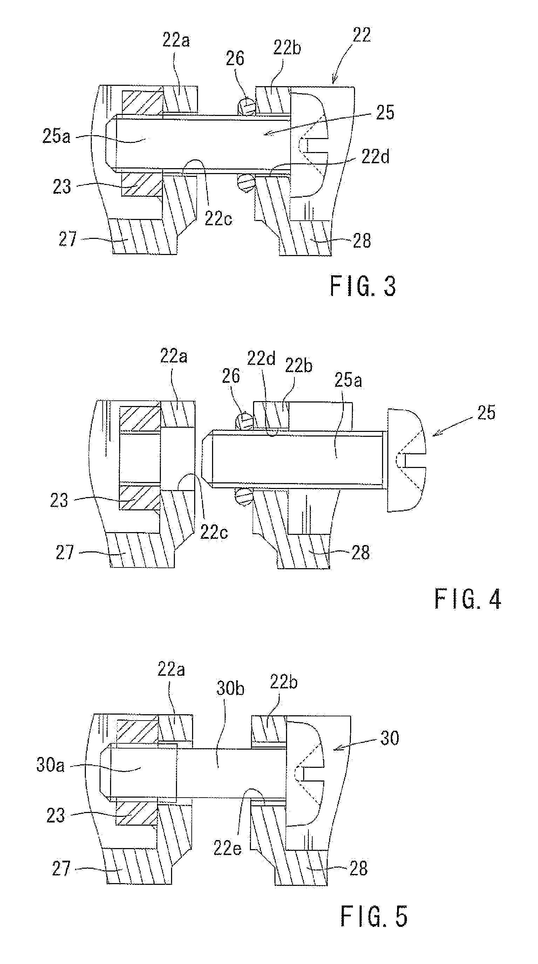

Insertion holes 22c and 22d are formed in the fixing screw tightening sections 22a and 22b, respectively, to have the same axis, so that a threaded shank section 25a of a fixing screw 25 can be inserted into the insertion holes 22c and 22d. More specifically, the threaded shank section 25a of the fixing screw 25 can be tightened into a fixing nut 23 that is welded to the fixing screw tightening section 22a positioned on the left side as viewed in FIG. 3. The fixing nut 23 is fixed to have the same axis as the insertion hole 22c.

Reinforcing plates 27 and 28 are attached to the fixing screw tightening sections 22a and 22b, respectively, by welding. The reinforcing plate 27 shown at a left side in FIG. 3 is attached in a state in which the reinforcing plate 27 straddles between a lower part of the fixing screw tightening section 22a and an upper surface of the cover main body 21. The reinforcing plate 28 shown at a right side in FIG. 3 is attached in a state in which the reinforcing plate 28 straddles over the bent corner of the fixing screw tightening section 22b. Bent condition (condition of facing each other) of the fixing screw tightening sections 22a and 22b toward the outer circumference side is reliably maintained by these reinforcing plates 27 and 28, and thus a tightening condition of the fixing screw 25 is maintained and an attaching condition (winding condition) of the attaching section 22 to the gear housing 8 is maintained so that unintended loosening of the fixing screw 25 can be prevented.

The threaded shank section 25a is provided with a removal prevention device. In the present example, a rubber ring 26 serves as the removal prevention device. The rubber ring 26 is fitted to the threaded shank section 25a at a position between the fixing screw tightening sections 22a and 22b. More specifically, this rubber ring 26 is fitted to the threaded shank section 25a by its elastic force. For this, the rubber ring 26 can move on the threaded shank section 25a in accordance with the movement of the threaded shank section 25a in a screw axis direction during tightening or loosening of the fixing screw 25.

The rubber ring 26 has such as size (diameter) that the rubber ring 26 cannot pass through the insertion holes 22c and 22d. This rubber ring 26 prevents the fixing screw 25 from being removed from the fixing screw tightening section 22b that is shown at the right side in FIG. 3. In this example, a commercially available O-ring is used as the rubber ring 26.

The fixing screw 25 can be tightened and loosened by use of a conventional screwdriver. When the fixing screw 25 is loosened from a state in which it is tightened as shown in FIG. 3, the fixing screw 25 moves in a right direction in FIG. 3 together with the threaded shank 25a, and the rubber ring 26 comes in contact with the fixing screw tightening section 22b shown at a right side in FIG. 3. If the fixing screw 25 is loosed on the condition that the rubber ring 26 is already in contact with the fixing screw tightening section 22b from the beginning as shown in FIG. 3, the threaded shank 25a moves in a right direction in FIG. 3 while the rubber ring 26 being held in position.

When the fixing screw 25 is loosened further in a state in which the rubber ring 26 is in contact with the fixing screw tightening section 22b, or in a state in which the rubber ring 26 is situated shortly before contacting the fixing screw tightening section 22b, the threaded shank 25a is removed from the fixing nut 23. FIG. 4 shows a state in which the threaded shank 25a has been completely removed from the fixing nut 23. As shown in FIG. 4, the rubber ring 26 remains on the threaded shank 25a even if the threaded shank 25a has been completely removed from the fixing nut 23. Because the size of the rubber ring 26 is determined such that the ring 26 cannot pass through the insertion hole 22d, the threaded shank 25a can be prevented from being removed from the insertion hole 22d. Therefore, the fixing screw 25 can be prevented from being removed from the fixing screw tightening section 22b, and eventually from the whetstone cover 20.

According to the device for preventing the fixing member from being removed in the present example as described above, when the attaching section 22 is released from being tightened against the boss section 8a by loosening the fixing screw 25 to some degree, a shielding area covered with the whetstone cover 20 can be adjusted by rotating the whetstone cover 20 around the axis of the spindle.

Even in the case that the fixing screw 25 has been too loosened and the threaded shank 25a has been removed from the fixing nut 23 unintentionally as shown in FIG. 4, or even in the case that the fixing screw 25 has been completely removed from the fixing nut 23 in order to remove the whetstone cover 20 from the boss section 8a, the fixing screw 25 is not removed from the fixing screw tightening section 22b (cannot pass through the insertion hole 22d) as shown in FIG. 4 because the rubber ring 26 is attached to the threaded shank 25a as a removal prevention device. For this, when the fixing screw 25 is tightened with respect to the fixing nut 23 afterward, the tightening operation can be done easily and speedily. Further, since the fixing screw 25 is prevented from being removed from the fixing screw tightening section 22b, there is no possibility of losing the fixing screw 25.

Further, since the device is constructed in such a way that it is only necessary to fit the rubber ring 26 to the threaded shank 25a and there is no need to modify the other configuration and materials, the device for preventing the fixing member from being removed as exemplified can be widely applied to the existing whetstone covers.

Various modifications can be made to the example described above. For example, although the rubber ring 26 that may be an O-ring having a circular cross section is used as the rubber ring 26 serving as the removal prevention device, a rubber sleeve or a polyurethane sleeve may be used alternatively.

Further, instead of the elastic rubber ring 26, a metallic retaining ring can be alternatively used as the removal prevention device. Further, a removal prevention device may be an engaging pin driven into an intermediate region of the threaded shank 25a in such a way that the pin protrudes in a radius direction. Further, a removal prevention device may be two nuts tightened mutually, which is referred to as a double nut, on an intermediate region of the threaded shank 25a.

Further, without using these separate members, a removal prevention device may be constituted by a fixing screw 30 having a threaded section 30a at its end and also a non-threaded section 30b on the remaining shank. To this end, a threaded hole 22e is formed instead of the insertion hole 22d in the fixing screw tightening section 22b which is shown at a right side in FIG. 5. This threaded hole 22e is formed in the same size as the fixing nut 23. In this case, the length of the non-threaded section 30b is larger than that of the threaded hole 22e in an insertion direction of the fixing screw 25 in order that the attaching section 22 can be tightened. When the attaching section 22 is tightened, the non-threaded section 30b comes through the threaded hole 22e and the fixing screw head comes in contact with an end surface of the fixing screw tightening section 22b. Further, when the attaching section 22 is loosened and the threaded section 30a has just been completely removed from the fixing nut 23, there is a space in the insertion direction of the fixing screw 25 between an end part of the threaded section 30a on the side of the non-threaded section 30b and an end part of the threaded hole 22e in the insertion direction. In this case, the end part of the threaded section 30a on the side of the non-threaded section 30b functions as a removal prevention device. According to this removal prevention device , even if the fixing screw 30 has been loosened and the threaded section 30a has been completely removed from the fixing nut 23, the fixing screw 30 is prevented from being removed from the fixing screw tightening section 22b which is shown at a right side in FIG. 5 because the threaded section 30a cannot pass through the threaded hole 22e unless the fixing screw 30 rotates in a loosening direction.

Further, the fixing nut 23 may be eliminated by forming a threaded hole instead of the insertion hole 22c of the fixing screw tightening section 22a which is shown at a left side in FIG. 5.

Further, although the fixing screw is exemplified as the fixing member, the fixing member may be a fixing pin or a clip.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A device for preventing removal of a fixing member (25) that can fix a whetstone cover (20) to a boss section (8a) in a disc grinder (1) having a spindle (7) to which a whetstone (10) is attached, a gear housing (8) rotatably supporting the spindle (7), and the whetstone cover (20) attached to the boss section (8a) of the gear housing (8), wherein:
the whetstone cover (20) comprises an attaching section (22) and a cover main body (21), the attaching section (22) being attached to the boss section (8a), the cover main body (21) covering around the whetstone (10);
the attaching section (22) is configured to be fixed by the fixing member (25) between opposite ends (22a; 22b) of the attaching section (22) in a state in which the attaching section (22) is wound around the boss section (8a); and
the fixing member (25) has a removal prevention device that prevents the fixing member (25) from being removed from at least one end of the attaching section (22).

2. The device according to claim 1, wherein:
one end of the attaching section (22) has a threaded hole (22e) and the other end has an insertion hole (22d);
the fixing member (25) comprises a fixing screw (25) inserted into the insertion hole (22d) and tightened into the threaded hole (22e), so that the attaching section (22) is fixed in the state of being wound around the boss section (8a); and
the removal prevention device is provided at the fixing screw (25) at a position between the opposite ends (22a; 22b) of the attaching section (22).

3. The device according to claim 2 wherein the removal prevention device comprises a rubber ring (26) fitted to the fixing screw (25).

4. The device according to claim 2 wherein the removal prevention device comprises a tubular rubber sleeve fitted to the fixing screw (25).

5. The device according to claim 2 wherein the removal prevention device comprises a metallic retaining ring fitted to the fixing screw (25).

6. The device according to claim 2 wherein the removal prevention device comprises a pin driven into an intermediate region of a threaded section (30a) of the fixing screw (30) in such a way that the pin protrudes outwardly from the intermediate region.

7. The device according to claim 1, wherein:
each end of the attaching section (22) has a threaded hole (22e);
the attaching section (22) is fixed by tightening a fixing screw (30) served as the fixing member (25) to one of the threaded hole (22e), in such a way that the attaching section (22) is wound around the boss section (8a);
the fixing screw (30) has a threaded section (30a) at its end and a non-threaded section (30b) in a remaining part of the fixing screw (30), the length of the non-threaded section (30b) being larger than that of the other threaded hole (22e) in an insertion direction of the fixing screw (30); and
the removal prevention device comprises an end part of the threaded section (30a) on the side of the non-threaded section (30b).

8. A whetstone cover (20) mounting device for a disc grinder (1), comprising:
a clamp member (22) capable of releasably clamping a whetstone cover (20) against a portion of a housing of the disc grinder (1);
wherein the clamp member (22) has a substantially C-shaped configuration and has a first end and a second end opposed to each other;
a tightening device (25; 30) coupled between the first and second ends (22a; 22b) of the clamp member (22) and capable of moving the first and second ends (22a; 22b) toward each other; and
a removal prevention device capable of preventing the tightening device (25; 30) from being removed from the clamp member (22).

9. The whetstone cover (20) mounting device according to claim 8, wherein:
the first end and the second end of the clamp member (22) have an insertion hole (22d) and a threaded hole (22e), respectively;
the tightening device (25; 30) comprises a screw capable of being inserted into the insertion hole (22d) and engaged with the threaded hole (22e) of the clamp member (22);
the removal prevention device prevents the screw from being removed from the insertion hole (22d).

10. The whetstone cover (20) mounting device as in claim 9, wherein the removal prevention device comprises a ring or a tube (26) fitted to the screw at a position between the first and second ends (22a; 22b) of the clamp member (22).

11. The whetstone cover (20) mounting device according to claim 10, wherein the ring or the tube (26) is made of rubber.

12. The whetstone cover (20) mounting device according to any one of claims 9 to 11, wherein the second end of the clamp member (22) includes a nut (23) having the threaded hole (22e) and fixedly mounted to the first end.

13. The whetstone cover (20) mounting device according to claim 8, wherein:
the first end and the second end of the clamp member (22) have a first threaded hole (22e) and a second threaded hole (22e), respectively;
the tightening device (25; 30) comprises a screw capable of being engaged with the first threaded hole (22e) of the clamp member (22) and also capable of being engaged with the second threaded hole (22e);
the removal prevention device comprises one of the first and second threaded holes (22e).
